# EUROPÄISCHE PATENTANMELDUNG

(11) **EP 2 418 105 A1**
(43) Veröffentlichungstag der Anmeldung: **15.02.2012**
(21) Anmeldenummer: 11006584.4
(22) Anmeldetag: 10.08.2011
(51) Int. Cl.: B60C 25/05

(54) **Vorrichtung zum Trennen eines Autoreifens von der Felge**

(30) Priorität: 12.08.2010 DE 202010011314 U
(71) Anmelder: Dagn, Josef, A-6345 Kössen (AT)
(72) Erfinder: Dagn, Josef, A-6345 Kössen (AT)
(74) Vertreter: Klingseisen, Franz

(57) **Zusammenfassung**

Vorrichtung zum Trennen des Reifens, insbesondere eines Autoreifens, von der Felge, umfassend einen Pressstempel zum Herausdrücken der Felge aus dem durch eine Auflage (1.1) abgestützten Reifen und eine Hubeinrichtung (2) mit einer Schneidkante (6) oder einer Deformiereinrichtung, mittels der die Felge auf dem Umfang zumindest eingeschnitten oder deformiert wird, bevor oder während die Felge durch den Pressstempel aus dem Reifen ausgestossen wird.

## Beschreibung

Die Erfindung betrifft eine Vorrichtung zum Trennen eines Autoreifens von der Felge, damit Felge und Reifen getrennt voneinander verschrottet werden können.

Eine Vorrichtung dieser Art ist aus DE 20 2009 001 322 bekannt, bei der ein Grundrahmen mit einem Auflagetisch für den Autoreifen und einer Führung für einen Hubschlitten vorgesehen ist, der relativ zum Grundrahmen anhebbar und absenkbar ist. Am Hubschlitten ist ein Hydraulikylinder angebracht, dessen Kolbenstrange relativ zum Hubschlitten als Pressstempel aus- und einfahrbar ist, mit dem die Felge des auf dem Auflagetisch liegenden Autoreifens aus dem Reifen herausgedrückt wird.

Bei neueren Felgenformen mit flachem und breitem Aufnahmebereich für den Reifen ergeben sich Schwierigkeiten, die Felge vom Reifen zu trennen, insbesondere auch bei Notlaufrädem und auf die Felge aufgeklebten Reifen (Runflats). Mit der vorliegenden Erfindung wird eine zuverlässige Trennung von Reifen und Felge unabhängig von der Felgenform erreicht.

Dadurch, dass an einer Hubeinrichtung eine Schneidkante vorgesehen wird, die sich radial zum Felgenumfang erstreckt und den äußeren Umfang der Felge zumindest einschneidet oder verformt, wird eine Sollbruchstelle geschaffen, die beim Ausstossen der Felge durch den Pressstempel dazu führt, dass sich die Felge verwindet und dabei leichter vom Reifen getrennt werden kann.

Die Erfindung wird beispielsweise anhand der Zeichnung näher erläutert. Es zeigen
- Fig. 1: den Aufbau der bekannten Vorrichtung in einer Seitenansicht,
- Fig. 2: eine Vorderansicht von rechts in Fig. 1,
- Fig. 3: eine Detaillansicht der erfindungsgemäßen Ausgestaltung mit Schneidkante,
- Fig. 4: eine perspektivische Ansicht mit Pressstempel und Autoreifen, und
- Fig. 5: einen eingeschnittenen Bereich an einer Felge.

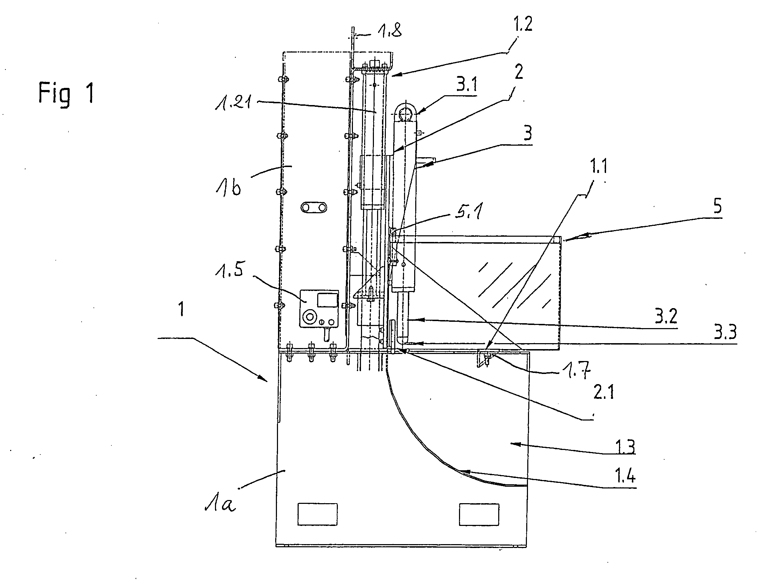

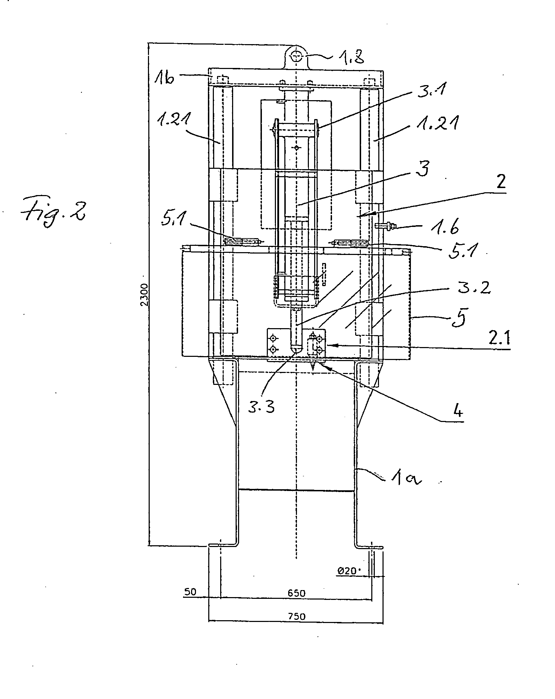

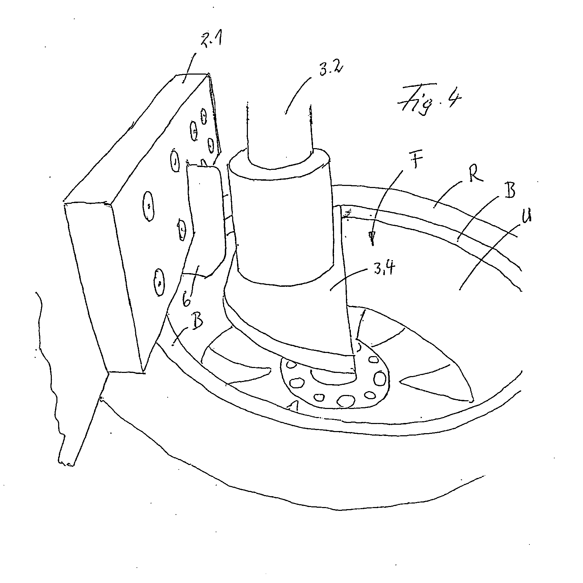

Fig. 1 und 2 zeigen eine bekannte Trennvorrichtung mit einem Grundrahmen 1 und einem Auflagetisch 1.1 für einen Reifen R mit Felge F (Fig. 4)und einer aufrechten Führung 1.2, die bei dem dargestellten Ausführungsbeispiel mit zwei Führungsstangen 1.21 versehen ist, an denen ein Hubschlitten 2 geführt ist, der durch einen nicht dargestellten Antrieb vorzugsweise in Form eines Hydraulikzylinders relativ zum Grundrahmen 1 angehoben und abgesenkt werden kann.

Bei dem dargestellten Ausführungsbeispiel besteht der Grundrahmen 1 aus einem Untergestell 1a, das den Auflagetisch 1.1 bildet und auf dem ein Ständer 1b aufgesetzt ist, der die Führung für den Hubschlitten trägt. Der Auflagetisch 1.1 ist in der Draufsicht im Wesentlichen durch zwei seitliche Auflageflächen ausgebildet, zwischen denen eine Ausnehmung 1.3 vorgesehen ist. Über der Ausnehmung ist ein Querbalken 1.7 angeordnet, auf dem der Reifen mit Felge zum Aufliegen kommt. Mit 1.8 ist eine Transportöse am Grundrahmen bezeichnet.

Am Hubschlitten 2 ist eine Montageplatte 2.1 angebracht und ein Zylinder 3 bei 3.1 angelenkt, dessen Kolbenstange 3.2 relativ zum Hubschlitten 2 ausfahrbar ist, um die Felge F nach unten in die Ausnehmung 1.3 des Auflagetisches 1.1 zu drücken und dabei die Felge F vom Reifen R zu trennen.

Die Felge F fällt in die Ausnehmung 1.3 des Auflagetisches 1.1, wobei sie über eine Schräge 1.4 zur offenen Vorderseite des Auflagetisches 1.1 gleitet, aus der die Felge austritt.

Da bei Reifen mit noch vorhandener Luftfüllung ein unkontrolliertes Wegschleudern von Gummiteilen auftreten kann, wenn mittels der Kolbenstange 3.2 die Felge aus dem Reifen herausgedrückt wird, ist im Bereich des Ansatzes 2.1 am Hubschlitten 2 ein Dorn 4 angebracht, der beim Absenken des Hubschlittens 2 den Reifen R zersticht, sodass die Luft entweichen kann, bevor die Felge F ausgestoßen wird. Dieser Dorn 4 kann als Hohldorn ausgebildet sein. Vorzugsweise wird ein spitz zulaufender Dorn mit einer seitlichen, längs verlaufenden Nut vorgesehen, durch die die Luft beim Einstechen kontrolliert entweichen kann. Durch diesen Dorn ist es auch möglich, Reifen mit Schlauch von der Felge zu trennen.

An der Seite des Grundrahmens 1 ist ein Schalter 1.5 zum Betätigen der Vorrichtung vorgesehen, nachdem ein Reifen mit Felge auf dem Auflagetisch 1.1 aufgelegt ist. Nach Betätigen des Schalters 1.5 wird der Hubschlitten 2 abgesenkt und der Reifen R eingeklemmt, wobei der Dorn 4 in den Reifen eingestochen wird, worauf der Zylinder 3 mit Druck beaufschlagt und die Kolbenstange 3.2 ausgefahren wird, die mit dem abgerundeten Ende in die vertieften Innenseite der Felge gleitet und die Felge nach unten auspresst, während der Reifen auf dem Auflagetisch 1.1 gehalten wird.

Zur Sicherung der die Vorrichtung bedienenden Person wird vorteilhafter Weise eine Schutzhaube 5 vorgesehen, die bei Absenken des Hubschlittens 2 den Reifen mit Felge abdeckt und beim Anheben des Hubschlittens weggeschwenkt wird. Die Schutzhaube 5 kann aus Plexiglas, Gitterrost oder einem Lochblech ausgebildet sein.

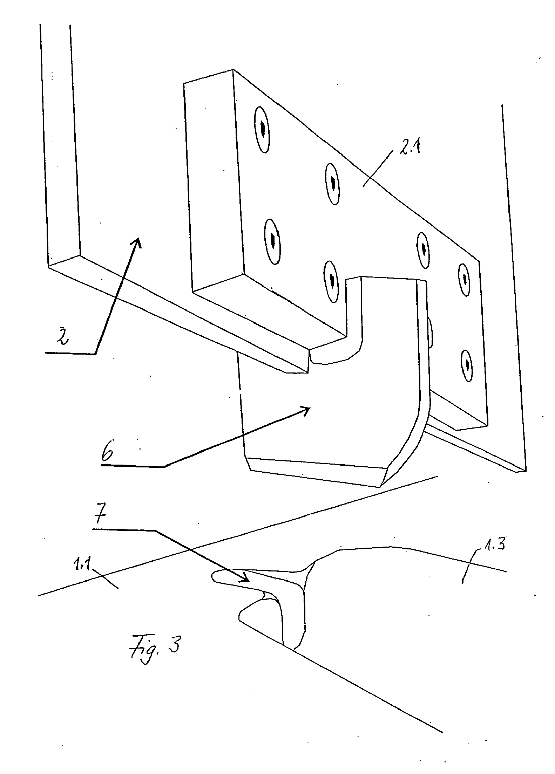

Fig. 3 zeigt in einer perspektivischen Ansicht eine erfindungsgemäße Ausgestaltung. Am unteren Ende des Hubschlittens 2 ist an der Montageplatte 2.1 ein Keil oder eine Schneidkante 6 befestigt. Diese Schneidkante 6 ist über dem Auflagetisch 1.1 so angeordnet, dass sie zumindest den äußeren Rand einer Felge durchtrennt oder verformt, wenn der Hubschlitten 2 abgesenkt wird.

Die Länge der Schneidkante 6, die sich radial zum Umfang einer Felge auf dem Auflagetisch 1.1 erstreckt, ist vorzugsweise so ausgelegt, dass sie bei flachen Felgen den ganzen Aufnahmebereich des Reifens einschneidet, wie dies aus Fig. 4 erkennbar ist. Beispielsweise beträgt die Länge der Schneidkante etwa 50 bis 100 mm.

Vorzugsweise wirkt die Schneidkante 6 mit einem Einschnitt oder einer Kerbe 7 am Rand der Ausnehmung 1.3 des Auflagetisches 1.1 zusammen, wobei die Felge durch die Schneidkante 6, die sich in diesen Einschnitt 7 hineinbewegt, am Umfang vollständig durchtrennt wird.

Fig. 4 zeigt in einer perspektivischen Ansicht eine Felge F mit flachem Aufnahmebereich B für einen Reifen R auf dem Auflagetisch, wobei die Schneidkante 6 am Aufnahmeabschnitt B der Felge angreift. Nach dem Einschneiden der Schneidkante 6 in die Felge oder nach dem Durchtrennen des Felgenumfangs wird die Kolbenstange bzw. der Pressstempel 3.2 relativ zum Hubschlitten 2 zum Ausstossen der Felge nach unten verfahren, wobei bei dem Ausführungsbeispiel nach Fig. 4 am unteren Ende der Kolbenstange 3.2 eine Druck- bzw. Pressplatte 3.4 vorzugsweise auswechselbar angebracht ist, die im Innenbereich der Felge zum Anliegen kommt und diese nach unten drückt. Hierbei verwindet sich aufgrund des Einschnitts durch die Schneidkante 6 die Felge so, dass sie ohne weiteres vom Reifen R getrennt werden kann.

Die Druckplatte 3.4 wird so ausgelegt, dass sie bei einer Speichenfelge mehrere der häufig nur sehr schmalen Speichen überdeckt und damit eine ausreichende Angriffsfläche zum Ausstossen der Felge vorhanden ist.

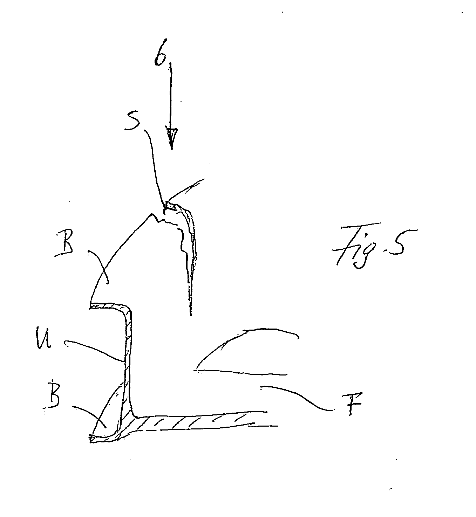

Fig. 5 zeigt als Beispiel einen eingeschnittenen Bereichs einer Felge mit flachem Aufnahmequerschnitt für den Reifen. Bei solchen Felgenformen wird durch den weitgehend gerade verlaufenden Umfangsabschnitt U die Felge sehr steif gegenüber einer parallel zur Achsrichtung in Richtung des Pfeiles 6 an diesem Umfangsabschnitt U angreifenden Kraft eines Pressstempels. Durch den Einschnitt S am Felgenumfang ergibt sich eine Sollbruchstelle, die zu einer Verformung der Felge beim Angreifen des Pressstempels führt, wodurch der Trennvorgang erleichtert wird. Dabei ist es zweckmäßig, wenn der Pressstempel 3.2 im Innenbereich der Felge angreift, während bei der bekannten Vorrichtung nach den Fig. 1 und 2 die Kolbenstange mit einem abgerundeten Ende vorzugsweise in dem äußeren Bereich der Felge angreift, in dem bei der erfindungsgemäßen Ausgestaltung die Schneidkante 6 angreift.

Die erfindungsgemäße Ausgestaltung mit einer Schneidkante ist nicht auf die in Fig. 5 wiedergegebene Felgenform beschränkt, sie kann vielmehr auch bei anderen Felgenformen vorteilhaft eingesetzt werden.

Es ist auch möglich, anstelle einer Schneidkante 6 eine andere Deformiereinrichtung vorzusehen, mittels der die Felge auf dem Umfang so verformt wird, dass der Trennvorgang beim Ausstossen durch den Pressstempel erleichtert wird.

Sowohl durch eine Schneidkante 6 als auch durch eine solche Deformiereinrichtung kann durch Eindrücken des Felgenumfangs bei schlauchlosen Reifen die Luft entweichen. Vorzugsweise wird aber der Dorn 4 in Verbindung mit der Schneidkante 6 verwendet, damit in jedem Fall die Luft entweicht, bevor der Trennvorgang beginnt.

Das Einschneiden oder Durchtrennen der Felge kann in einem Arbeitshub mit dem Ausstossvorgang durch den Pressstempel 3.2 erfolgen. Es ist aber auch möglich, zunächst den Hubschlitten abzusenken und die Felge einzuschneiden, worauf dann etwas zeitlich versetzt der Pressstempel angreift.

Die beschriebene Vorrichtung mit einer Schneidkante zum Einschneiden oder Verformen der Felge vor dem Auspressen aus dem Reifen mittels eines Pressstempels ist auch bei anderen Trennvorrichtungen als der in Fig. 1 und 2 wiedergegebenen von Vorteil. Wenn beispielsweise bei einer Trennvorrichtung der Reifen mit Felge aufrecht in eine Ausnehmung gerollt wird, bei der ein Pressstempel seitlich angreift, um die Felge seitlich aus dem aufrechtstehenden Reifen herauszudrücken, ist in gleicher Weise eine Schneidkante oder eine Deformiereinrichtung von Vorteil, mit der die Felge auf dem Umfang eingeschnitten oder zumindest deformiert wird, damit sie sich beim nachfolgenden Ausstossen durch den Pressstempel leichter verwinden kann, um die Trennung vom Reifen zu erleichtern. Bei einer solchen Ausgestaltung der Trennvorrichtung würde sich in der Ansicht der Fig. 4 die Schneidkante seitlich auf die aufrechtstehende Felge zu bewegen und der Pressstempel 3.2 würde die Felge ebenfalls seitlich aus dem Reifen drücken.

Vorzugsweise wird an der Trennvorrichtung eine Positionshilfe zum Anordnen des Autoreifens vorgesehen, damit die Bedienungsperson den Reifen mit Felge in die richtige Stellung z.B. auf dem Auflagetisch 1.1 positioniert. Hierfür wird zweckmäßigerweise eine Lasereinrichtung vorgesehen, die quer über den Auflagetisch 1.1 einen Laserstrahl aussendet, so dass die Bedienungsperson sich beim Auflegen des Reifens mit Felge auf dem Auflagetisch an diesem Laserstrahl orientieren kann, der eine hintere Querlinie am Auflagetisch markiert.

## Patentansprüche

1. Vorrichtung zum Trennen des Reifens (R), insbesondere eines Autoreifens, von der Felge (F), umfassend
- einen Pressstempel (3.2, 3.4) zum Herausdrücken der Felge (F) aus dem durch eine Auflage (1.1) abgestützten Reifen (R) und
- eine Hubeinrichtung (2) mit einer Schneidkante (6) oder einer Deformiereinrichtung, mittels der die Felge (F) auf dem Umfang zumindest eingeschnitten oder deformiert wird, bevor oder während die Felge durch den Pressstempel (3.2, 3.4) aus dem Reifen ausgestossen wird.

2. Vorrichtung nach Anspruch 1, wobei sich die Schneidkante (6) in radialer Richtung zum Umfang der Felge (F) über eine Abmessung von etwa 50 bis 100 mm erstreckt.

3. Vorrichtung nach Anspruch 1 oder 2, wobei der Pressstempel (3.2) mit einer Pressplatte (3.4) versehen ist, die im Innenbereich der Felge (F) zum Anliegen kommt.

4. Vorrichtung nach Anspruch 3, wobei die Pressplatte (3.4) auswechselbar an dem Pressstempel (3.2) angebracht ist.

5. Vorrichtung nach einem der vorhergehenden Ansprüche, wobei die Schneidkante (6) über einem Einschnitt (7) auf der Auflagefläche (1.1) des Reifens (R) angeordnet ist und mit diesem zusammenwirkt.

6. Vorrichtung nach Anspruch 5, wobei der Einschnitt (7) am Rand einer Ausnehmung (1.3) der Auflagefläche (1.1) ausgebildet ist.

7. Vorrichtung nach einem der vorhergehenden Ansprüche, wobei die Schneidkante (6) oder eine Deformiereinrichtung an einem Hubschlitten (2) angebracht ist, der über einem Auflagetisch (1.1) anhebbar und absenkbar ist und an dem ein Zylinder angelenkt ist, dessen Kolbenstange (3.2) als Pressstempel dient.

8. Vorrichtung nach einem der vorhergehenden Ansprüche, wobei im Bereich der Schneidkante (6) oder der Deformiereinrichtung ein Dorn (4) am Hubschlitten bzw. an der Hubeinrichtung (2) angebracht ist, durch den der Reifen vor Beginn des Trennvorgangs zerstochen wird.
